**Europäisches Patentamt**

**European Patent Office**

**Office européen des brevets**

(19)

(11) Veröffentlichungsnummer : **0 011 772 B1**

(12) **EUROPÄISCHE PATENTSCHRIFT**

(45) Veröffentlichungstag der Patentschrift :
09.09.81

(21) Anmeldenummer : **79104489.4**

(22) Anmeldetag : **14.11.79**

(51) Int. Cl.³ : **F 21 V 7/18, G 03 B 15/02**

(54) **Filmleuchte.**

(30) Priorität : **27.11.78 DE 2851245**

(43) Veröffentlichungstag der Anmeldung :
**11.06.80 (Patentblatt 80/12)**

(45) Bekanntmachung des Hinweises auf die Patenter-
teilung : **09.09.81 Patentblatt 81/36**

(84) Benannte Vertragsstaaten :
**AT BE CH DE FR GB IT NL SE**

(56) Entgegenhaltungen :
**DE - U - 7 116 875**

(73) Patentinhaber : **Dr. Ing. Böhme + Co.
Neckarstrasse 9
D-3300 Braunschweig (DE)**

(72) Erfinder : **Böhme, Hermann Dr. Ing.
Schiefer Berg 13
D-3340 Wolfenbüttel (DE)**
Erfinder : **Lohse, Georg
Klosterstrasse 4
D-3303 Vechelde (DE)**

(74) Vertreter : **Gramm, Werner, Dipl.-Ing. et al
Patentanwälte Gramm + Lins Theo-
dor-Heuss-Strasse 2
D-3300 Braunschweig (DE)**

Imprimerie Jouve, 17, rue du Louvre, 75001 Paris, France

## Filmleuchte

Die Erfindung betrifft eine Filmleuchte, bestehend aus einem länglichen, mit einem lösbaren Gehäusedeckel verschlossenen, elektrische Bauteile aufnehmenden Gehäuseteil, das die Fassungsteile für zumindest eine Lampe sowie einen Reflektor trägt, wobei zwischen Gehäuse und Reflektor ein Zwischenraum zum Durchtritt von Kühlluft vorgesehen ist.

Eine derartige Ausführungsform ist durch offenkundige Vorbenutzung sowie einen Prospekt der Firma Dr. Ing. Böhme + Co. unter der Typnummer 1 000 K bekanntgeworden. Das Gehäuse dieser bekannten Filmleuchte besteht aus einem verhältnismäßig flachen Gehäuseteil, das in einen zweiten Gehäuseteil übergeht, dessen Höhe bzw. Dicke angenähert dreimal so groß ist wie die Höhe bzw. Dicke des flachen Gehäuseteils. An den Stirnseiten des flachen Gehäuseteils ist ein U-förmig ausgebildeter Bügel angelenkt, wobei die U-Schenkel dieses Haltebügels kürzer sind als der Abstand zwischen Schwenkachse und der der Lampe zugeordneten Stirnfläche des Gehäuses. Das Gehäuse schlägt also nach einem bestimmten Verschwenkwinkel gegenüber dem Haltebügel mit dem dickeren bzw. höheren Gehäuseteil gegen den Haltebügel an. Während der flachere Gehäuseteil zur Aufnahme elektrischer Bauteile wie Schalter, Sicherung u. dgl. dient, umschließt der höhere bzw. dickere Gehäuseteil den Reflektor sowie die Fassungsteile zur Halterung und elektrischen Verbindung der Lampe und die Lampe selbst, die als zweiseitig gesockelter Langbrenner ausgebildet ist. An den Reflektor sind zwei Schwenkklappen angelenkt, deren Schwenkachsen parallel zur Lampenachse und oberhalb hiervor liegen. In Nichtgebrauchsstellung werden diese Schwenkklappen über den Reflektor und somit auch über die Lampe geschwenkt und bilden so eine stirnseitige Abdeckung des Gehäuses. Die Schwenkklappen bilden genau genommen keinen Teil des Reflektors, sondern dienen lediglich als Lichtklappen, denen bezogen auf die gehäusefest angeordnete Reflektorfläche nur eine Hilfsfunktion zukommt.

Bei dieser bekannten Filmleuchte entspricht die Breite des parallel zur Lampenachse verlaufenden Schenkels des Haltebügels etwa der Dicke bzw. Höhe des flachen Gehäuseteils. Insgesamt ist also das Gehäuse etwa dreimal höher, als der genannte Schenkel des Haltebügels breit ist. Dieser Schenkel ist als Befestigungsschiene ausgebildet, über die die Filmleuchte unmittelbar oder mittelbar an einer Kamera o. dgl. befestigt werden kann.

Der Erfindung liegt die Aufgabe zugrunde, die eingangs beschriebene Filmleuchte kompakter auszubilden.

Diese Aufgabe wird gemäß der Erfindung dadurch gelöst, daß der Reflektor in lichtem Abstand vor dem Gehäuse freistehend angeordnet ist und aus einem gehäusefesten, im Querschnitt gewölbten und etwa der Breite des genannten Gehäuses entsprechenden Reflektorteil sowie zwei Schwenkklappen besteht, die in Nichtgebrauchsstellung etwa in den Ebenen der Flachseiten des Gehäuses liegen, so daß in Nichtgebrauchsstellung das Gehäuse, der Gehäusedeckel, die Fassungsteile, die Lampe sowie die Reflektor-Schwenkklappen gemeinsam einen flachen quaderförmigen Körper bilden.

Bei der neuen Filmleuchte sind somit die Fassungsteile für die Lampe sowie der Reflektor nicht in einem zweiten Gehäuseteil untergebracht. Vielmehr liegt der Reflektor in freiem Abstand oberhalb von der oberen Längsseite des flachen Gehäuses. Damit die Filmleuchte in Nichtgebrauchsstellung insgesamt einen flachen quaderförmigen Körper bilden kann, ist der Reflektor dreiteilig ausgebildet, so daß also der Reflektor von den beiden genannten Schwenkklappen sowie einem gehäusefesten, im Querschnitt gewölbten Reflektorteil gebildet wird. Dabei können die beiden Schwenkklappen mit jeweils einem ihrer Schwenkachse benachbarten, streifenförmigen Bereich noch hinter bzw. neben der Lampenlängsachse liegen und daher unmittelbar als Reflektor wirken. Wesentlich ist dabei, daß in Nichtgebrauchsstellung die beiden Schwenkklappen flach gegen die Flachseiten des Gehäuses anliegen bzw. etwa in den Ebenen der Flachseiten des Gehäuses liegen, so daß die Dicke des flachen quaderförmigen Körpers praktisch durch die Breite des die elektrischen Bauteile aufnehmenden Gehäuses bestimmt wird.

Dabei ist es vorteilhaft, wenn ein Haltebügel um eine Schwenkachse parallel zur Lampenachse verschwenkbar angeordnet ist und in der Nichtgebrauchsstellung in eine die Vorderseite der Lampe abdeckende Position verschwenkt ist. Ferner kann es zweckmäßig sein, wenn eine durch die Schwenkachse und die Lampenachse verlaufende Ebene in Nichtgebrauchsstellung eine Symmetricebene der Filmleuchte ist.

Dabei ist es vorteilhaft, wenn die Gehäusehöhe etwa der Breite des parallel zur Lampenachse verlaufenden Schenkels des Haltebügels entspricht.

Die neue Filmleuchte baut somit nur noch etwa ein Drittel so hoch wie die vorbekannte Ausführungsform. In Nichtgebrauchsstellung erhält man einen glattflächigen, flachen quaderförmigen Körper, der sich besonders einfach verpacken bzw. bevorraten läßt. In der Nichtgebrauchsstellung, also der Verpackungsstellung, bildet der vor die Lampe verschwenkte Haltebügel einen hervorragenden Schutz für die Lampe, so daß auf die bei der vorbekannten Ausführungsform vorgesehene Abdeckung der Lampe durch die genannten Schwenkklappen verzichtet werden kann.

In einer bevorzugten Ausführungsform kann das Gehäuse ausschließlich die elektrischen Bauteile umfassen und auf seiner der Lampe zugewandten Längsseite geschlossen sein, die von zumindest einem freien Sockel zur Aufnahme der Fassungsteile überragt wird. Bei Verwendung zweiseitig gesockelter Lampen kann das Gehäuse auf seiner der Lampe zugewandten Längsseite zwei Sockel tragen, die mit der jeweiligen Stirnseite des Gehäuses fluchten und zwischen sich den gehäusefesten, im Querschnitt gewölbten Reflektor tragen. Es ist aber auch möglich, daß das Gehäuse an seinen beiden Stirnseiten je einen Sockel trägt, die die genannte Längsseite des Gehäuses überragen und zwischen sich den gehäusefesten, im Querschnitt gewölbten Reflektor tragen. Im letzteren Fall würden also die unteren Enden der Sockel mit der unteren Stirnseite des Gehäuses bzw. mit dem hier vorgesehenen Gehäusedeckel fluchten.

Die Schwenkachsen der Schwenkklappen können in den beiden Sockeln festgelegt sein. Ferner können die Schwenkklappen des Reflektors durch verschwenkbare Wärmeschutzschilder abgedeckt sein, die in Nichtgebrauchsstellung zwischen den zurückgeschwenkten Schwenkklappen und dem Gehäuse liegen.

Durch zumindest ein die Schwenkklappen und/oder die Wärmeschutzschilder bei ihrer Verschwenkbewegung beaufschlagendes Federelement läßt sich eine Schwergängigkeit dieser Schwenkteile erreichen so daß diese die manuell eingestellte Schwenkposition beibehalten. Es ist aber auch möglich, die Schwenkklappen des Reflektors und/oder die Wärmeschutzschilder in Gebrauchsstellung drückende Federelemente vorzusehen.

Der bzw. die Sockel können über eine Steckverbindung lösbar am Gehäuse befestigt sein. Zur Erhöhung des Bedienungskomforts können die Sockel am Gehäuse diesem gegenüber verschieb- oder verschwenkbar gelagert und in ihren jeweiligen Endstellungen arretierbar sein. So können z.B. die beiden Sockel in Längsrichtung des Gehäuses in entgegengesetzte Richtung auseinandergezogen und in dieser Endstellung arretiert werden, um so in einfacher Weise die Lampe auszuwechseln bzw. eine neue Lampe einzusetzen.

Wird bei der neuen Filmleuchte eine Lampe mit einem diese umschließenden Schutzrohr verwendet, dann ist es erfindungsgemäß zweckmäßig wenn dieses Schutzrohr in den beiden Sockeln lösbar gehalten ist. Die Gehäusehöhe kann dann angenähert dem Durchmesser des Schutzrohres entsprechen.

Weitere Merkmale und Vorteile der Erfindung werden anhand eines Ausführungsbeispieles erläutert.

In der Zeichnung ist eine als Beispiel dienende Ausführungsform der Erfindung dargestellt. Es zeigen :

Figur 1 einen Querschnitt durch eine Filmleuchte mit in Gebrauchsstellung verschwenkten Reflektor-Schwenkklappen und mit einem rechtwinklig zum Gehäuse der Filmleuchte verschwenkten Haltebügel ;

Figur 2 die Filmleuchte gemäß Fig. 1 in Stirnansicht, wobei die Reflektor-Schwenkklappen sowie der Haltebügel in Nichtgebrauchsstellung verschwenkt sind und

Figur 3 einen Längsschnitt durch die Filmleuchte gemäß den Figuren 1 und 2, jedoch mit einem nach unter verschwenkten Haltebügel.

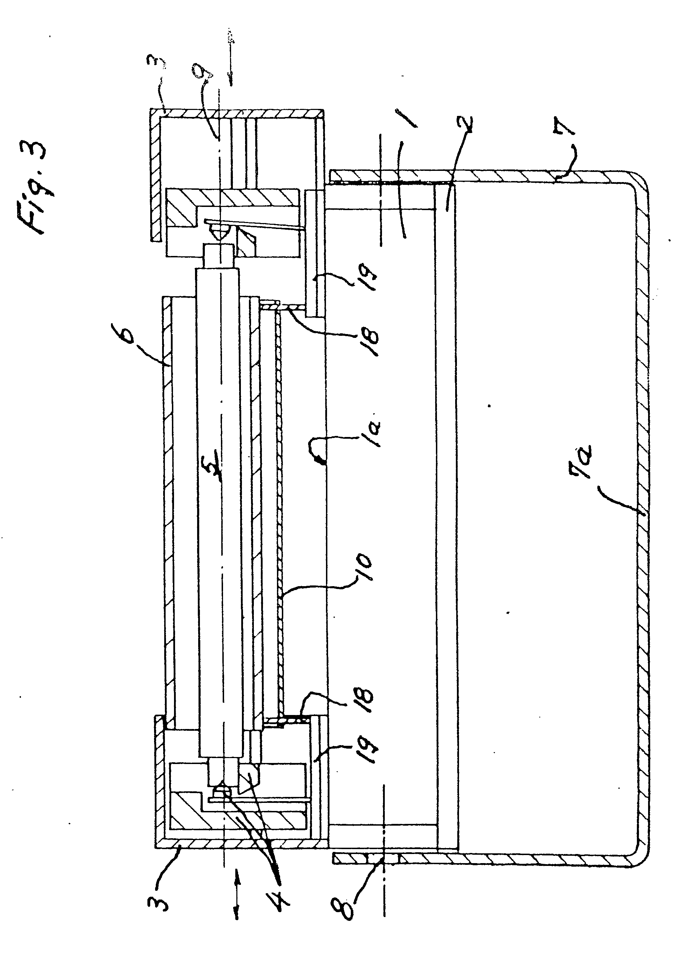

Demnach besteht die dargestellte Filmleuchte aus einem als flacher Quader ausgebildeten Gehäuse 1 mit einer oberen Längsseite 1a, Stirnseiten 1b und Flachseiten 1c. Auf seiner unteren Längsseite ist das Gehäuse 1 durch einen Lösbaren Gehäusedeckel 2 verschlossen. Das Gehäuse 1 trägt auf seiner oberen Längsseite 1a zwei Sockel 3, in denen Fassungsteile 4 zur mechanischen Halterung und elektrischen Kontaktierung einer Lampe 5 untergebracht sind. Die Lampe 5 ist dargestellt als zweiseitig gesockelter Langbrenner. Außerdem ist ein die Lampe 5 umschließendes transparentes Schutzrohr 6 angedeutet, das ebenfalls in den beiden Sockeln 3 lösbar gehalten ist. Zum Auswechseln der Lampe 5 mit ihrem Schutzrohr 6 bzw. zum Einsetzen einer neuen Lampe sind die beiden Sockel 3 in Längsrichtung des Gehäuses 1 in entgegengesetzte Richtung verschiebbar und sowohl in der ausgezogenen Position (siehe rechte Darstellung in Fig. 3) sowie in der eingeschobenen Position (siehe linke Darstellung in Fig. 3) arretierbar. Die Mittel für die Arretierung sind herkömmlicher Art und wurden daher nicht dargestellt.

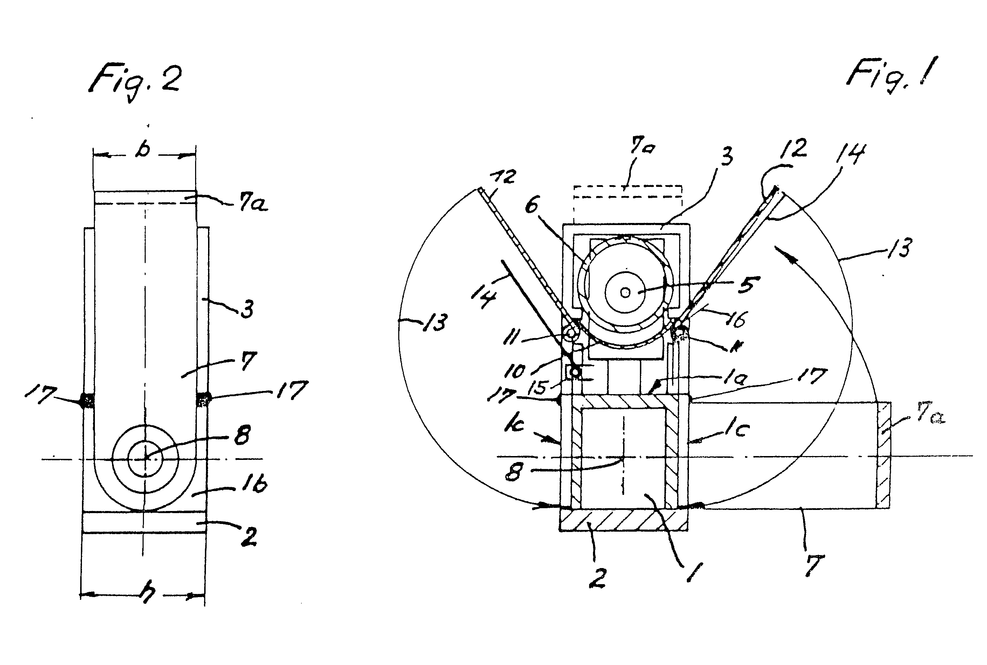

An den Stirnseiten 1b des Gehäuses 1 ist ein Haltebügel 7 angelenkt, dessen Schwenkachse 8 parallel zur Lampenachse 9 liegt. Der parallel zur Lampenachse 9 liegende Schenkel 7a des Haltebügels 7 deckt die Lampe 5 ab, wenn der Haltebügel 7 in seine Nichtgebrauchstellung verschwenkt wird (siehe Figur. 2). Die Gehäusehöhe h entspricht angenähert der Breite b des Schenkels 7a des Haltebügels (siehe Fig. 2.).

Die Sockel 3, die in ihrer eingeschobenen Position (siehe linke Darstellung in Fig. 3) mit der jeweiligen Stirnseite 1b des Gehäuses 1 fluchten, tragen zwischen sich einen gehäusefesten, im Querschnitt gewölbten Reflektorteil 10. Außerdem sind in den beiden Sockeln 3 über parallel zur Lampenachse 9 angeordnete Schwenkachsen 11 Schwenkklappen 12 gelagert, die in Gebrauchsstellung die in Fig. 1 dargestellte Position einnehmen, in Nichtgebrauchsstellung hingegen in Richtung der in Figur 1 eingezeichneten Schwenkpfeile 13 flach gegen die Flachseiten 1c des Gehäuses 1 geklappt werden. Figur 1 läßt erkennen, daß die Schwenkachsen 11 unterhalb der Lampenachse 9 liegen, und daß die beiden Schwenkklappen 12 in Nichtgebrauchsstellung in die Außenkontur des Gehäuses 1 eintauchen und dabei den freien Zwischenraum zwischen Schutzrohr 6 und der oberen Längsseite 1a des Gehäuses 1 überdecken. Aus Gründen der besseren Übersichtlichkeit sind diese Schwenkklappen 12 in Figur 3 weggelassen. Grundsätzlich können die Schwenkklappen 12 entsprechend den optischen Erfordernissen auch leicht gewölbt und/oder gestuft ausgebildet sein.

Figur 1 macht deutlich, daß Schwenkachse 8 und Lampenachse 9 in jedem Fall in einer Ebene liegen. Insbesondere Fig. 2 zeigt zusätzlich, daß in Nichtgebrauchsstellung bei dem so von Gehäuse 1, Gehäusedeckel 2, Fassungsteilen 4, Lampe 5 und Reflektor 10, 12 gebildeten quaderförmigen Körper die durch die Schwenkachse 8 des Haltebügels 7 und durch die Lampenachse 5 verlaufende Ebene eine Symmetrieebene der Filmleuchte ist.

In Figur 1 ist angedeutet, daß die Schwenkklappen 12 durch verschwenkbare Wärmeschutzschilder 14 abgedeckt sein können, die in Nichtgebrauchsstellung zwischen den zurückgeschwenkten Schwenkklappen und dem Gehäuse 1 liegen. Ferner ist in Figur 1 schematisch ein die Schwenkklappen 12 sowie die Wärmeschutzschilder 14 bei ihrer Verschwenkbewegung beaufschlagendes Federelement 15 angedeutet (in der einen Hälfte der Figur 1). Als Alternative zeigt die andere Hälfte der Figur 1 Federelemente 16, die die Schwenkklappen 12 in Gebrauchsstellung drücken. Schließlich kann auch eine die Schwenkbewegung des Gehäuses 1 gegenüber dem Haltebügel 7 begrenzende, manuell entriegelbare Raste 17 vorgesehen sein.

Figur 3 läßt erkennen, daß der Reflektorteil 10 in gehäusefest angeordneten Federbügeln 18 gelagert ist. Ferner ist für die Sockel 3 jeweils eine Schiebeführung 19 erkennbar, die unmittelbar an die oberen Längsseite 1a des Gehäuses 1 angeformt sein kann. Die Alternativlösung, wonach die Sockel 3 über eine Steckverbindung lösbar am Gehäuse 1 befestigt sind, ist nicht dargestellt.

Das Gehäuse 1 kann aus Kunststoff bestehen, während die Sockel 3 aus Metall-Druckguß hergestellt sein können. Gemäß Figur 1 entspricht die Gehäusehöhe h angenähert dem Durchmesser des Schutzrohres 6.

Für die Wärmeschutzschilder 14 sind in Figur 1 zwei Alternativlösungen gezeigt : In der linken Figurenhälfte ist das Wärmeschutzschild im Abstand von der Schwenkklappe 12 angelenkt, während in der rechten Hälfte der Darstellung für beide Teile die gleiche Schwenkachse Verwendung findet.

**Ansprüche**

1. Filmleuchte, bestehend aus einem länglichen, mit einem lösbaren Gehäusedeckel verschlossenen, elektrische Bauteile aufnehmenden Gehäuseteil, das die Fassungsteile für zumindest eine Lampe sowie einen Reflektor trägt, wobei zwischen Gehäuse und Reflektor ein Zwischenraum zum durchtritt von Kühlluft vorgesehen ist, dadurch gekennzeichnet, daß der Reflektor in lichtem Abstand vor dem Gehäuse (1) freistehend angeordnet ist und aus einem gehäusefesten, im Querschnitt gewölbten und etwa der Breite des genannten Gehäuses entsprechenden Reflektorteil (10) sowie zwei Schwenkklappen (12) besteht, die in Nichtgebrauchsstellung etwa in den Ebenen der Flachseiten (1c) des Gehäuses liegen, so daß in Nichtgebrauchsstellung das Gehäuse (1), der Gehäusedeckel (2), die Fassungsteile (4), die Lampe (5) sowie die Reflektor-Schwenkklappen (12) gemeinsam einen flachen quaderförmigen Körper bilden.

2. Filmleuchte nach Anspruch 1, dadurch gekennzeichnet, daß ein Haltebügel (7) um eine Schwenkachse (8) parallel zur Lampenachse (9) verschwenkbar angeordnet ist und in der Nichtgebrauchsstellung in eine die Vorderseite der Lampe (5) abdeckende Position verschwenkt ist.

3. Filmleuchte nach Anspruch 2, dadurch gekennzeichnet, daß eine durch die Schwenkachse (8) und die Lampenachse (9) verlaufende Ebene in Nichtgebrauchsstellung eine Symmetrieebene der Filmleuchte ist.

4. Filmleuchte nach Anspruch 2 oder 3, dadurch gekennzeichnet, daß die Gehäusehöhe (h) etwa der Breite (b) des parallel zur Lampenachse (9) verlaufenden Schenkels (7a) des Haltebügels (7) entspricht.

5. Filmleuchte nach einem der vorhergehenden Ansprüche, dadurch gekennzeichnet, daß das Gehäuse (1) ausschließlich die elektrischen Bauteile umfaßt und auf seiner der Lampe (5) zugewandten Längsseite (1a) geschlossen ist, die von zumindest einem freien Sockel (3) zur Aufnahme der Fassungsteile (4) überragt wird.

6. Filmleuchte nach einem der vorhergehenden Ansprüche, dadurch gekennzeichnet, daß das Gehäuse (1) auf seiner der Lampe (5) zugewandten Längsseite (1a) zwei Sockel (3) trägt, die mit der jeweiligen Stirnseite (1b) des Gehäuses (1) fluchten und zwischen sich den gehäusefesten, im Querschnitt gewölbten Reflektor (10) tragen.

7. Filmleuchte nach einem der Ansprüche 1 bis 5, dadurch gekennzeichnet, daß das Gehäuse (1) an seinen beiden Stirnseiten (1b) je einen Sockel (3) trägt, die die genannte Längsseite (1a) des Gehäuses (1) überragen und zwischen sich den gehäusefesten, im Querschnitt gewölbten Reflektor (10) tragen.

8. Filmleuchte nach einem der vorhergehenden Ansprüche, dadurch gekennzeichnet, daß die Schwenkachsen (11) der Schwenkklappen (12) unterhalb der Lampenachse (9) liegen.

9. Filmleuchte nach einem der vorhergehenden Ansprüche, dadurch gekennzeichnet, daß die Schwenkachsen (11) der Schwenkklappen (12) in den beiden Sockeln (3) festgelegt sind.

10. Filmleuchte nach einem der vorhergehenden Ansprüche, dadurch gekennzeichnet, daß die Schwenkklappen (12) des Reflektors durch verschwenkbare Wärmeschutzschilder (14) abgedeckt sind, die in Nichtgebrauchsstellung zwischen den zurückgeschwenkten Schwenkklappen und dem Gehäuse (1) liegen.

11. Filmleuchte nach einem der vorhergehenden Ansprüche, gekennzeichnet durch zumindest ein die Schwenkklappen (12) und/oder die Wärmeschutzschilder (14) bei ihrer Verschwenkbewegung beaufschlagendes Federelement (15).

12. Filmleuchte nach einem der Ansprüche 1 bis 10, gekennzeichnet durch die Schwenkklappen (12) des Reflektors und/oder die Wärmeschutzschilder (14) in Gebrauchsstellung drückende Federelemente (16).

13. Filmleuchte nach einem der Ansprüche 2 bis 12, gekennzeichnet durch eine die Schwenkbewegung des Gehäuses (1) gegenüber dem Haltebügel (7) begrenzende, manuell entriegelbare Raste (17).

14. Filmleuchte nach einem der vorhergehenden Anprüche, dadurch gekennzeichnet, daß der Reflektor in gehäusefest angeordneten Federbügeln (18) gelagert ist.

15. Filmleuchte nach einem der Ansprüche 5 bis 14, dadurch gekennzeichnet, daß der bzw. die Sockel (3) über eine Steckverbindung lösbar am Gehäuse (1) befestigt sind.

16. Filmleuchte nach einem der Ansprüche 6 bis 15, dadurch gekennzeichnet, daß die Sockel (3) am Gehäuse (1) diesem gegenüber verschieb- oder verschwenkbar gelagert und in ihren jeweiligen Endstellungen arretierbar sind.

17. Filmleuchte nach einem der vorhergehenden Ansprüche, dadurch gekennzeichnet, daß das Gehäuse (1) aus Kunststoff besteht.

18. Filmleuchte nach einem der Ansprüche 5 bis 17, dadurch gekennzeichnet, daß die Sockel (3) aus Metall-Druckguß bestehen.

19. Filmleuchte nach einem der vorhergehenden Ansprüche, gekennzeichnet durch eine Halterung für ein die Lampe (5) umschließendes Schutzrohr (6).

20. Filmleuchte nach Anspruch 19, dadurch gekennzeichnet, daß das Schutzrohr (6) in den eiden Sockeln (3) lösbar gehalten ist.

21. Filmleuchte nach Anspruch 19 oder 20, dadurch gekennzeichnet, daß die Gehäusehöhe (h) angenähert dem Durchmesser des Schutzrohres (6) entspricht.

## Claims

1. Film lamp comprising an elongate housing part closed by a detachable housing lid and containing electrical components and carrying the lamp holding parts for at least one lamp and also a reflector, whereby a space is provided between housing and reflector for the passage of cooling air, characterised in that the reflector is arranged free-standing at a small distance from the housing (1) and consists of a reflector part (10) curved in cross-section and fast to the housing and with a width corresponding approximately to the width of the said housing, as well as two hinged flaps (12) which, when not in use, extend in approximately the planes of the flat sides (1c) of the housing so that, when not in use, the housing (1), the housing lid (2), the lamp holding parts (4), the lamp (5) and the hinged flaps (12) of the reflector form a flat box shaped body together.

2. Film lamp according to claim 1, characterised in that a handle (7) is arranged to swivel about an axis (8) parallel to the lamp axis (9) and, in the inoperative position, is swivelled into a position covering the front of the lamp (5).

3. Film lamp according to claim 2, characterised in that a plane extending through the swivel axis (8) and the lamp axis (9) is a plane of symmetry of the film lamp in the inoperative position.

4. Film lamp according to claim 2 or 3, characterised in that the housing height (h) corresponds approximately to the width (b) of the arm (7a) of the handle (7) extending parallel to the lamp axis (9).

5. Film lamp according to one of the preceding claims, characterised in that the housing (1) contains only the electrical components and is closed on its longitudinal side (1a) facing the lamp (5) with at least one free socket (3) for receiving the lamp holding parts (4) extending beyond it.

6. Film lamp according to one of the preceding claims, characterised in that on its longitudinal side (1a) facing the lamp (5), the housing (1) carries two sockets (3) which are in alignment with the corresponding face (1b) of the housing (1) and between them carry the cross-sectionally curved reflector (10) which is fast to the housing.

7. Film lamp according to one of the claims 1 to 5, characterised in that at its two faces (1b) the housing (1) carries a socket (3) each, which extend beyond the said longitudinal side (1a) and between them support the cross-sectionally curved reflector (10) fast to the housing.

8. Film lamp according to the preceding claims, characterised in that the swivel axes (11) of the hinged flaps (12) lie below the lamp axis (9).

9. Film lamp according to one of the preceding claims, characterised in that the swivel axes (11) of the hinged flaps (12) are located in the two sockets (3).

10. Film lamp according to one of the preceding claims, characterised in that the hinged flaps (12) of the reflector are covered by swivellable heat protection shields (14) which, in the inoperative position, are situated between the swung-back hinged flaps and the housing (1).

11. Film lamp according to one of the preceding claims, characterised by at least one spring element (15) acting upon the hinged flaps (12) and/or the heat protection shields (14) as they are swivelled.

12. Film lamp according to claims 1 to 10, characterised by spring elements (16) pressing the hinged flaps (12) of the reflector and/or the heat protection shields (14) into the operative position.

13. Film lamp according to one of claims 2 to 12, characterised by a manually releasable catch (17) limiting the swivelling movement of the housing (1) in relation to the handle (7).

14. Film lamp according to one of the preceding claims, characterised in that the reflector is supported in spring brackets (18) fast to the housing.

15. Film lamp according to one of claims 5 to 14, characterised in that the sockets (3) are attached to the housing (1) by means of a plug-in connection, so as to be detachable.

16. Film lamp according to one of claims 6 to 15, characterised in that the sockets (3) on the housing (1) are slidable or hinged in relation to it and can be retained in their respective end positions.

17. Film lamp according to one of the preceding claims, characterised in that the housing (1) is made from a synthetic material.

18. Film lamp according to one of claims 5 to 17, characterised in that the sockets (3) are made from die-cast metal.

19. Film lamp according to one of the preceding claims, characterised by a holder for a protection sleeve (6) surrounding the lamp (5).

20. Film lamp according to claim 19, characterised in that the protection sleeve (6) is detachably held in the two sockets (3).

21. Film lamp according to claim 19 or 20, characterised in that the housing height (h) corresponds to approximately the diameter of the protection sleeve (6).

## Revendications

1. Dispositif d'éclairage cinématographique formé d'un boîtier oblong contenant des éléments électriques, fermé par un couvercle amovible et portant les moyens d'attache d'au moins une lampe ainsi qu'un réflecteur, un espace intermédiaire pour le passage de l'air de refroidissement étant prévu entre le boîtier et le réflecteur, caractérisé en ce que le réflecteur est disposé, détaché, dans l'espace libre devant le boîtier 1 et est constitué d'un élément réflecteur (10) fixé au boîtier, de section courbe et d'une largeur correspondant à peu près à celle dudit boîtier, ainsi que de deux volets pivotants (12) qui, dans la position de non utilisation, sont disposés à peu près dans les plans des côtés plats (1c) du boîtier, de sorte que, dans la position de non utilisation, le boîtier (1), le couvercle de boîtier (2), les moyens d'attache (4), la lampe (5) ainsi que les volets pivotants (12) du réflecteur forment ensemble un corps en forme de parallélépipède rectangle.

2. Dispositif d'éclairage cinématographique suivant la revendication 1, caractérisé en ce qu'un étrier de maintien (7) est monté pivotant autour d'un axe de pivotement (8) parallèle à l'axe (9) de la lampe et, dans la position de non utilisation, il est amené par pivotement dans une position couvrant le côté antérieur de la lampe (5).

3. Dispositif d'éclairage cinématographique suivant la revendication 2, caractérisé en ce qu'un plan passant par l'axe de pivotement (8) et par l'axe (9) de la lampe est, dans la position de non utilisation, un plan de symétrie du dispositif d'éclairage.

4. Dispositif d'éclairage cinématographique suivant la revendication 2 ou 3, caractérisé en ce que la hauteur (h) du boîtier correspond à peu près à la largeur (b) de la partie (7a) de l'étrier de maintien (7) qui s'étend parallèlement à l'axe (9) de la lampe.

5. Dispositif d'éclairage cinématographique suivant l'une quelconque des revendications précédentes, caractérisé en ce que le boîtier (1) contient exclusivement les éléments électriques, son long côté (1a) tourné vers la lampe (5) étant fermé et étant surmonté au moins d'une coiffe libre (3) destinée à recevoir les moyens d'attache (4).

6. Dispositif d'éclairage cinématographique suivant l'une quelconque des revendications précédentes, caractérisé en ce que le boîtier (1) porte, sur son long côté (1a) tourné vers la lampe (5), deux coiffes (3) qui sont disposées en ligne chacune avec un côté d'about (1b) du boîtier (1) et qui portent entre elles le réflecteur (10) de section courbe fixé au boîtier.

7. Dispositif d'éclairage cinématographique suivant l'une quelconque des revendications 1 à 5, caractérisé en ce que le boîtier (1) porte une coiffe (3) sur chacun de ses deux côtés d'about (1b), ces coiffes surmontant le dit long côté (1a) du boîtier (1) et portant entre elles le réflecteur de section courbe (10) fixé au boîtier.

8. Dispositif d'éclairage cinématographique suivant l'une quelconque des revendications précédentes, caractérisé en ce que les axes de pivotement (11) des volets pivotants (12) sont disposés en dessous de l'axe (9) de la lampe.

9. Dispositif d'éclairage cinématographique suivant l'une quelconque des revendications précédentes, caractérisé en ce que les axes de pivotement (11) des volets pivotants (12) sont fixés dans les deux coiffes (3).

10. Dispositif d'éclairage cinématographique suivant l'une quelconque des revendications précédentes, caractérisé en ce que les volets pivotants (12) du réflecteur sont couverts par des écrans de protection thermique (14) pivotants qui, dans la position de non utilisation, sont disposés entre les volets pivotants rabattus et le boîtier (1).

11. Dispositif d'éclairage cinématographique suivant l'une quelconque des revendications précédentes, caractérisé en ce qu'il comporte au moins un élément à ressort (15) sollicitant les volets pivotants (12) et/ou les volets de protection thermique (14) lors de leurs mouvements de pivotement.

12. Dispositif d'éclairage cinématographique suivant les revendications 1 à 10, caractérisé en ce qu'il comporte des éléments à ressort (16) sollicitant les volets pivotants (12) du réflecteur et/ou les écrans de protection thermique (14) vers leurs positions d'utilisation.

13. Dispositif d'éclairage cinématographique suivant les revendications 2 à 12, caractérisé en ce qu'un dispositif d'arrêt (17) déverrouillable à la main limite le mouvement de pivotement du boîtier (1) par rapport à l'étrier de maintien (7).

14. Dispositif d'éclairage cinématographique suivant l'une quelconque des revendications précédentes, caractérisé en ce que le réflecteur est monté dans les supports élastiques (18) fixés au boîtier.

15. Dispositif d'éclairage cinématographique suivant les revendications 5 à 14, caractérisé en ce que la ou les coiffes (3) sont fixées au boîtier (1) de manière amovible par l'intermédiaire d'un assemblage à enfichage.

16. Dispositif d'éclairage cinématographique suivant l'une quelconque des revendications 6 à 15, caractérisé en ce que les coiffes (3) sont montées sur le boîtier (1) de manière à pouvoir pivoter ou coulisser par rapport à celui-ci et peuvent être arrêtées dans leurs positions finales respectives.

17. Dispositif d'éclairage cinématographique suivant l'une quelconque des revendications précédentes, caractérisé en ce que le boîtier (1) est en matière plastique.

18. Dispositif d'éclairage cinématographique suivant l'une quelconque des revendications 5 à 17, caractérisé en ce que les coiffes (3) sont en métal coulé sous pression.

19. Dispositif d'éclairage cinématographique suivant l'une quelconque des revendications précédentes, caractérisé en ce qu'il comporte une fixation pour un tube de protection (6) entourant la lampe (5).

20. Dispositif d'éclairage cinématographique suivant la revendication 19, caractérisé en ce que le tube de protection (6) est maintenu de manière amovible dans les deux coiffes (3).

21. Dispositif d'éclairage cinématographique suivant la revendication 19 ou 20, caractérisé en ce que la hauteur (h) du boîtier correspond à peu près au diamètre du tube de protection (6).

Fig. 1

Fig. 2

Fig. 3

0011772